# EUROPEAN PATENT SPECIFICATION

(11) **EP 3 837 939 B1**
(45) Date of publication and mention of the grant of the patent: **15.05.2024**
(21) Application number: 19218064.4
(22) Date of filing: 19.12.2019
(51) Int. Cl.: A01B 63/10, A01B 63/11, A01B 73/00, B62D 37/04

(54) **METHOD FOR CONTROLLING AGRICULTURAL MACHINERY**
VERFAHREN ZUR STEUERUNG VON LANDWIRTSCHAFTLICHEN MASCHINEN
PROCÉDÉ DE COMMANDE DE MACHINE AGRICOLE

(43) Date of publication of application: 23.06.2021
(73) Proprietor: CNH Industrial Sweden AB, 590 96 Överum (SE)
(72) Inventor: HERTZOG, Daniel, 59376 Blackstad (SE); LINDERSON, Bengt Per-Inge, 594 94 Odensvi (SE); WALLIN, Per Dennis, 693 37 Västervik (SE); NILSSON, Carl Ola Fredrik, 59340 Västervik (SE); SVENSSON, Robert, 59095 Loftahammar (SE); NAHDIN, Rickard Karl Gustav, 59492 Gamleby (SE)
(74) Representative: CNH Industrial IP Department

(56) References cited:
- EP-A1- 0 433 669
- EP-A1- 0 518 226
- EP-A1- 1 388 279
- WO-A1-2013/053645
- US-A1- 2003 085 042

## Description

### Background of the Invention

The present disclosure relates to agricultural machinery, particularly, but not exclusively, an agricultural plough. Another aspect of the present disclosure relates to a method of controlling agricultural machinery and a control unit configured to control agricultural machinery.

In agriculture, farming cycles are followed that can roughly be divided into the different steps of land preparation, seed sowing, fertilizing, irrigation, crop growth, and harvesting. Each of these steps is critical to yield optimal crop results and achieve the desired returns on initial investments. Of the listed steps, land preparation is typically further divided into steps of, as necessary, clearing obstructions (e.g. bushes, stones and rocks) and subsequent tillage.

Tilling crumbles and loosens the soil, improves the soil structure and incorporates crop residues and manure into the soil, thus fertilizing the ground. The improved soil structure allows for increased plant root growth, soil aeration and water penetration/filtration. Overall this results in higher yields, better long-term soil fertility, soil moisture retention, and weed management. Tillage can be separated into primary (relatively deep) and secondary (relatively shallow) tillage. In primary tillage, such as ploughing, the soil is turned over such that nutrients come to the surface. In addition to turning up the soil to bring fresh nutrients to the top and depositing plant residue below where it will break down, this process also aerates the earth - enabling it to hold more moisture. Preparing the land to a greater depth produces a rougher surface finish than secondary tillage. Secondary tillage (e.g. seedbed cultivation) breaks up soil clods into smaller masses which might be desirable for small seeds or plants that have minimal clod-handling ability.

Primary tillage, and particularly ploughing, is widely regarded as one of the most effective ways of preventing crop disease, removing weeds, and controlling mice and other pests. In its simplest form the turnplough, also known as the mouldboard plough, includes a variety of plough bodies, which are blades for penetrating and turning over the soil in arrays of adjacent trenches, known as furrows. Modern plough implements typically include a plurality of plough bodies connected to a plough frame such that they are laterally offset manner from each other when the plough is in use. Each plough body is connected to the plough frame via corresponding beams. The plough frame, in turn, is connected to an agricultural work vehicle for towing or pushing the plough implement via a hitch arranged at a front or back end of the frame.

The plough implement may be transferable between two or more positions. In an operating position, the plough implement may be positioned with respect to the agricultural work vehicle such that the ground engaging tools of the plough penetrate the soil of the work area at a desired working depth. In a transport position, the plough implement may be positioned such that ground engaging tools are lifted off the ground. The transport position may be used to transport the agricultural implement to and from the work area, often on public roads. The plough implement may be hydraulically movable with respect to the agricultural work vehicle between the transport position and the operating position.

Particularly in fully-mounted ploughs, the plough implement may be lifted above the road surface by the agricultural work vehicle with no part of the plough implement being in contact with the road surface. The significant weight of the plough implement, therefore, rests entirely on the agricultural work vehicle, creating stress that is substantially amplified by forces created due to changes in speed or direction during transport. These forces created during transport may result in instability and/or increased wear.

In view of the above, there is generally a need for an improved method for controlling the agricultural machinery, particularly but not exclusively during transport.

It is an aim of the present disclosure to solve or at least ameliorate one or more problems of the prior art.

EP1388279A1 describes a hitch control system for a work vehicle that combines a front suspension position signal, a hitch load signal and a hitch position signal to generate a valve command signal that controls the hitch position so as to alleviate pitching and maximize front wheel ground contact time.

### Summary of the Invention

Aspects and embodiments of the disclosure provide agricultural machinery and a method for controlling agricultural machinery as claimed in the appended claims.

According to a first aspect of the present disclosure, there is provided agricultural machinery comprising an agricultural work vehicle comprising a suspension system, an agricultural implement connected to the agricultural work vehicle, the agricultural implement comprising a plurality of ground engaging tools and at least one actuator for moving one or more components of the agricultural implement, wherein the at least one actuator is functionally connected to the suspension system of the agricultural work vehicle so as to move components of the agricultural implement in response to an activation of the suspension system.

In one embodiment, the at least one actuator is hydraulically and/or electrically and/or electro-hydraulically connectable to the suspension system of an agricultural work vehicle.

In another embodiment, the agricultural machinery comprises an agricultural work vehicle comprising a suspension system, and wherein the at least one actuator comprises a hydraulic actuator and the suspension system comprises at least one hydraulic shock absorber, the hydraulic shock absorber being hydraulically connectable to the hydraulic actuator.

The hydraulic actuator may be configured to extend in response to a compression of the hydraulic shock absorber and to retract in response to an extension of the hydraulic shock absorber.

In yet another embodiment, the hydraulic actuator comprises a first piston-side chamber separated from a second rod-side chamber by a piston, wherein the suspension system comprises a front suspension and a rear suspension, and wherein hydraulic shock absorbers of the front and rear suspensions are hydraulically connected to the first and second chamber of the hydraulic actuator.

In another embodiment, a hydraulic shock absorber of the front suspension comprises a first piston-side chamber separated from a second rod-side chamber by a piston, wherein the first chamber of the shock absorber is hydraulically connected to the first chamber of the hydraulic actuator, and wherein the second chamber of the shock absorber is hydraulically connected to the second chamber of the hydraulic actuator.

In another embodiment, a hydraulic shock absorber of the rear suspension comprises a first piston-side chamber separated from a second rod-side chamber by a piston, wherein the first chamber of the shock absorber is hydraulically connected to the second chamber of the hydraulic actuator, and wherein the second chamber of the shock absorber is hydraulically connected to the first chamber of the hydraulic actuator.

In yet another embodiment, the agricultural machinery comprises an agricultural work vehicle comprising a suspension system, wherein the suspension system comprises a sensor device for determining a sensor-data indicative of an activation of the suspension system, and wherein the agricultural machinery comprises a control unit that is configured to:
receive the sensor-data from the sensor device; and
determine a control-signal for activating the at least one actuator on the basis of the sensor-data.

In another embodiment, the at least one actuator comprises one or more of:
a plough-width-adjustment actuator for moving the ground engaging tools in
   a lateral direction;
a depth-adjustment-actuator for adjusting the working depth of one or more of the ground engaging tools;
a stone-trip-actuator for biasing one or more of the ground engaging tools into a predetermined working position;
a roll-over-actuator for reversing the agricultural implement; and
a first-furrow-adjustment actuator.

The agricultural implement may be a fully-mounted agricultural implement, preferably a fully-mounted plough implement.

According to another aspect of the present disclosure, there is provided a method of controlling agricultural machinery, the agricultural machinery comprising:
an agricultural work vehicle with a suspension system; and
an agricultural implement connected to the work vehicle, the agricultural implement comprising a plurality of ground engaging tools and at least one actuator for moving one or more components of the agricultural implement,
wherein the method comprises actively moving one or more components of the agricultural implement by activating the at least one actuator in response to an activation of the suspension system.

The method may comprise transferring hydraulic fluid between the suspension system and the at least one hydraulic actuator in response to an activation of the suspension system.

According to another embodiment, the agricultural machinery comprises a sensor device for determining sensor-data indicative of an activation of the suspension system, and wherein the method comprises:
receiving sensor-data from the sensor device; and
determining a control-signal for activating the at least one actuator on the basis of the sensor-data.

In yet another embodiment, the suspension system comprises a plurality of shock absorbers and the agricultural machinery comprises a plurality of actuators for moving one or more of the ground engaging tools, and wherein the method comprises:
determining suspension-activation-data indicative of which of the shock absorbers is activated during use of the agricultural machinery in response to an activation of the suspension system;
selectively activating one or more of the plurality of actuators on the basis of the suspension-activation-data.

According to another aspect of the present disclosure, there is provided a control unit according to claim 15.

There may be provided a computer program, which when run on a computer, causes the computer to configure any apparatus, including a control unit, disclosed herein or perform any method disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software may be an assembly program.

The computer program may be provided on a computer readable medium, which may be a physical computer readable medium such as a disc or a memory device, or may be embodied as a transient signal. Such a transient signal may be a network download, including an internet download.

In some aspects of the present disclosure, the agricultural machinery may comprise an agricultural work vehicle (or tractor), which may include one or more control units, such as but not limited to programmable or non-programmable processors. Similarly, the agricultural implement may include one or more control units, such as but not limited to programmable or non-programmable processors. Additionally, or alternatively, the agricultural implement may be controlled by one or more control devices of the agricultural work vehicle. Similarly, the agricultural work vehicle may be controlled by one or more control devices of the plough implement.

The agricultural work vehicle and/or the agricultural implement may be remote controlled, e.g. from a farm office. Accordingly, the agricultural work vehicle may include one or more communication interfaces for connection to a remote processor and/or a remote controller. Similarly, the agricultural implement may include one or more communication interfaces for connection to a remote processor and/or a remote controller.

### Brief Description of the Drawings

One or more embodiments of the present disclosure will now be described by way of example only, with reference to the accompanying drawings, in which:
Figure 1A shows a right-side view of a plough implement with fixed ground engaging tools;
Figure 1B shows a left-side view of the plough implement shown in Figure 1A;
Figure 1C shows a plan view of the plough implement shown in Figure 1A;
Figure 2 shows a schematic plan view of an agricultural machine's trajectory in its operating position;
Figure 3 shows a schematic representation of agricultural machinery during transport;
Figure 4 shows a schematic representation of a hydraulic system for damping movements of the agricultural machinery.
Figure 5 shows a schematic representation of an electrical system for damping movements of the agricultural machinery.
Figure 6 shows a flow chart of a method for controlling an agricultural work vehicle according to an embodiment of the present invention.

### Detailed Description of the Drawings

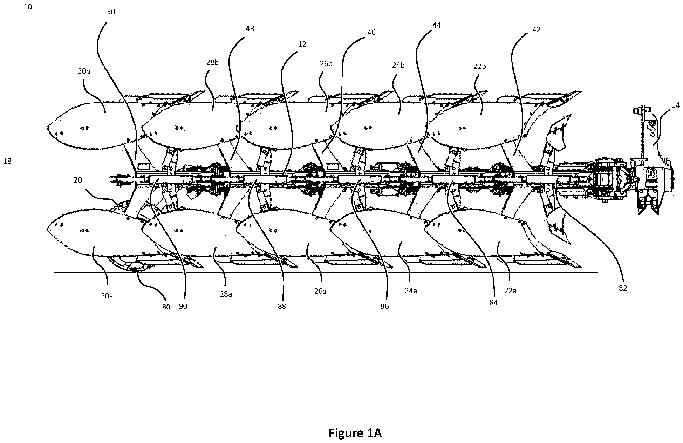

Figures 1A to 1C show various views of an agricultural implement, particularly a plough implement 10. As will be described in more detail below, the plough implement 10 shown in Figures 1A to 1C is a reversible plough. It will be understood that the agricultural machinery of the present disclosure may include any other suitable agricultural implement, such as seeders, sprayers, harrows, cultivators, tedders etc.

The plough implement 10 comprises a main frame 12. The main frame 12 may be a rectangular or round tube extending between a headstock 14 at a front end 16 of the plough towards a plough wheel 20 at a rear end 18 of the plough. The main frame 12 supports a variety of ground-engaging tools.

In the example of Figures 1A to 1C, the ground engaging tools include plough bodies 22a, 22b, 24a, 24b, 26a, 26b, 28a, 28b, 30a, 30b and plough skimmers 32a, 32b, 34a, 34b, 36a, 36b, 38a, 38b, 40a, 40b. A plurality of first ground engaging tools, i.e. plough bodies 22a, 24a, 26a, 28a, 30a and skimmers 32a, 34a, 36a, 38a, and 40a, are arranged on a first side of the main frame 12. In a first configuration of the main frame 12, illustrated in Figures 1A to 1C, the plurality of first ground engaging tools are arranged below the main frame 12.

A plurality of second ground engaging tools, i.e. plough bodies 22b, 24b, 26b, 28b, 30b and skimmers 32b, 34b, 36b, 38b, and 40b, are arranged on a second side of the main frame 12, opposite to the plurality of first ground engaging tools. In the first configuration of the main frame 12, illustrated in Figures 1A to 1C, the plurality of second ground engaging tools are arranged above the main frame.

Each of the plough bodies 22a, 22b, 24a, 24b, 26a, 26b, 28a, 28b, 30a, 30b is connected to the main frame 12 by means of beams 42, 44, 46, 48, 50. Each of the beams 42, 44, 46, 48, 50 has a substantially Y-shaped structure.

A first beam 42 supports a first pair of plough bodies 22a, 22b. A second beam 44 supports a second pair of plough bodies 24a, 24b. A third beam 46 supports a third pair of plough bodies 26a, 26b. A fourth beam 48 supports a fourth pair of plough bodies 28a, 28b. A fifth beam 50 supports a fifth pair of plough bodies 30a, 30b.

Each of the beams 42, 44, 46, 48, and 50 of the plough implement 10 shown in Figures 1A to 1C includes a hydraulic stone-trip mechanism. To this end, each of the Y-shaped beams 42, 44, 46, 48, 50 is pivotable with respect to the main frame 12 about pivots of a corresponding beam housing such that each of the beams 42 to 50 can pivot their respective plough bodies 22a, 22b, 24a, 24b, 26a, 26b, 28a, 28b, 30a, 30b out of the soil, when the latter hits a subterranean obstacle, such as a stone buried in the soil. To avoid pivotal movement of the beams 42, 44, 46, 48, 50 and thus also a withdrawal of the corresponding plough bodies 22a to 30b from the soil during normal operation, i.e. when no subterranean obstacle is encountered, the beams are biased into a working position (horizontal position shown in Figure 1A) by means of hydraulic actuators 82, 84, 86, 88, and 90. Depending on the hydraulic pressure within hydraulic actuators 82 to 90, a bias-force is applied to the beams 42 to 50 biasing the beams into their working position (horizontal position in Figure 1A). A pivotal movement of the beams 42 to 50 is only possible if the bias-force of the hydraulic actuators 82 to 90 is overcome by a drag-force experienced by the plough bodies 22a to 30b working the soil. The bias-force of the hydraulic actuators 82 to 90 is adjusted such that the drag-force experienced by the plough bodies 22a to 30b is only overcome if significant obstacles are encountered.

Each of the pairs of plough bodies 22a, 22b, 24a, 24b, 26a, 26b, 28a, 28b, 30a, 30b is designed to create a furrow in the field when the plough is dragged behind or pushed by an agricultural work vehicle such as a tractor. It follows that each run of the illustrated plough implement 10 through a field creates five adjacent furrows.

A first mounting rail 52 supports a first pair of skimmers 32a, 32b. A second mounting rail 54 supports a second pair of skimmers 34a, 34b. A third mounting rail 56 supports a third pair of skimmers 36a, 36b. A fourth mounting rail 58 supports a fourth pair of skimmers 38a, 38b. A fifth mounting rail 60 supports a fifth pair of skimmers 40a, 40b. The skimmers 32a, 32b, 34a, 34b, 36a, 36b, 38a, 38b, 40a, 40b and/or their respective mounting rails 52, 54, 56, 58, 60 may be adjustable with respect to the main frame 12 to change the distance between the skimmers 32a, 32b, 34a, 34b, 36a, 36b, 38a, 38b, 40a, 40b and the main frame 12. In one example, the skimmers 32a, 32b, 34a, 34b, 36a, 36b, 38a, 38b, 40a, 40b may be movable up and down towards and away from the main frame 12 to individually adjust the working depth of each of skimmers 32a, 32b, 34a, 34b, 36a, 36b, 38a, 38b, 40a, 40b. The skimmers 32a, 32b, 34a, 34b, 36a, 36b, 38a, 38b, 40a, 40b may either be manually or automatically adjustable.

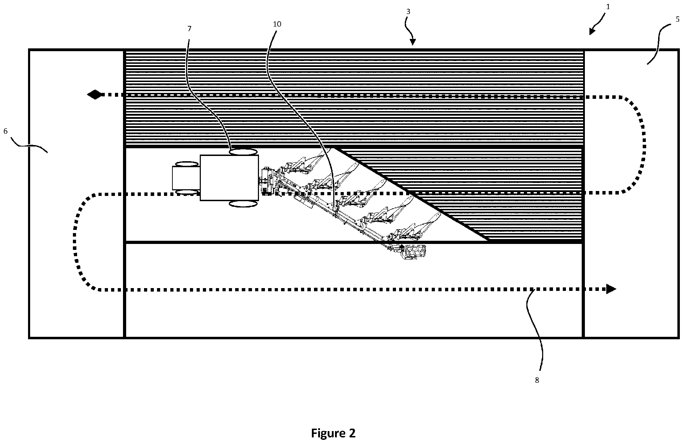

Turning to Figure 2, a typical operation of agricultural machinery comprising an agricultural work vehicle 7 and a plough implement 10 is described. In use, the plough implement 10 is drawn as an attachment (implement) behind the agricultural towing vehicle 7 (e.g. an agricultural work vehicle). It will be appreciated that it may equivalently be feasible to locate the plough implement 10 in front of or both in front of and behind the agricultural work vehicle 7.

Figure 2 shows a schematic work area 1, e.g. a crop field, which is divided into a main field 3 and headlands 5,6. A agricultural work vehicle 7 draws the plough implement 10 across the main field 3 in generally parallel working rows. The working rows are part of the trajectory 8 of the agricultural work vehicle 7 and typically run in parallel with a long edge of the work area 1. Each working row represents an individual run of the agricultural machinery across the field between headlands 5 and 6. As will be described in more detail below, a five-furrow plough, such as the exemplary plough shown in Figures 1A to 1C creates a total of five furrows per run.

At the end of each run/working row, the agricultural work vehicle 7 and plough implement 10 use the upcoming headland 5 or 6 for turning around, as indicated by trajectory 8. It is known in the art that the soil of the headlands 5, 6 is subject to greater levels of soil compaction as it receives more traffic per unit area than the main field 3. In order not to disturb the soil of the headlands 5, 6 more than necessary, it is known to lift the ground engaging tools, such as the plough bodies and the skimmers, off the ground into a headland or transfer position, just before the plough implement 10 reaches the headlands 5 or 6 respectively. Once the agricultural work vehicle 7 and the corresponding plough implement 10 have turned on the headland 5, 6, the ground engaging tools of the plough implement 10 are, again, lowered towards an operating position to engage the soil of the main field 3.

In the illustration of Figure 2, the plough implement 10 is working on the main field 3 and, therefore, is arranged in the operating position. As the plough implement 10 reaches the border between the headland 5/6 and the main field 3, the plough implement 10 is transferred to a headland/transfer position. It follows that each working row starts with an adjustment of the plough from the transfer position into the operating position and ends with an adjustment of the plough from the operating position into the transfer position.

The plough implement 10 shown in Figures 1A to 1C is of the fully-mounted type. In fully-mounted ploughs, the weight of the plough is carried exclusively by the agricultural work vehicle when the plough is in its transfer position (on the headlands). In other words, the plough is then exclusively supported by the agricultural work vehicle 7 via headstock 14 and may be lifted off the ground with a lift cylinder of a tractor linkage.

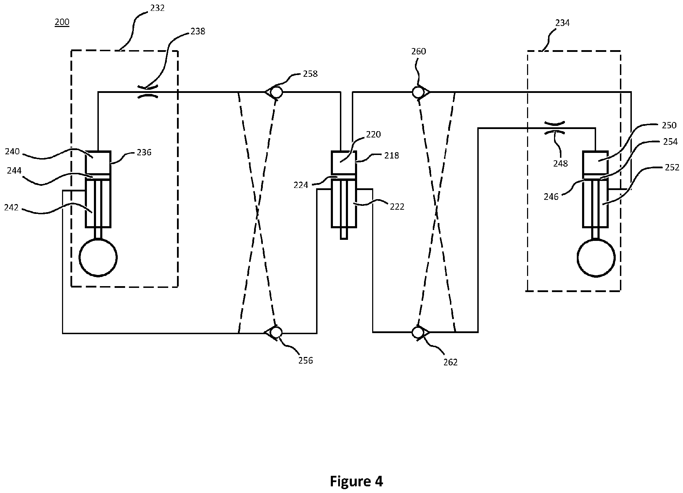

During the turning movement on the headlands, the plough implement 10 is also reversed. That is, the main frame 12 is rotated by 180 degrees with respect to the headstock 14 to move the plough from a first configuration to a second configuration. It will be appreciated that if the operator is ploughing in the furrow (as shown in Figure 4), then the main frame 12 may not be rotated by exactly 180 degrees, it is more likely to be 190-200 degrees or 160-170 degrees depending on which direction the main frame 12 turns. If operator is ploughing on-land, then the main frame 12 may be rotated by an angle that is closer to 180 degrees, perhaps exactly 180 degrees.

In its first configuration shown in Figures 1A to 1C, the plough implement 10 is set up such that the plurality of first ground engaging tools, i.e. plough bodies 22a, 24a, 26a, 28a, and 30a and skimmers 32a, 34a, 36a, 38a, 40a, of each of the pairs are in contact with the soil. This first configuration is shown in Figure 2 and sometimes also referred to as the "left side configuration", since most of the plough bodies are arranged to the left of agricultural work vehicle 7. In its second configuration (not illustrated), the plough implement 10 is set up such that the plurality of second ground engaging tools, i.e. plough bodies 22b, 24b, 26b, 28b, 30b and skimmers 32b, 34b, 36b, 38b, 40b, are in contact with the soil. This second configuration is achieved after rotating the main frame by 180 degrees, such that the majority of plough bodies are then located to the right of the agricultural work vehicle (not shown). The second configuration is, therefore, also sometimes referred to as the "right side configuration".

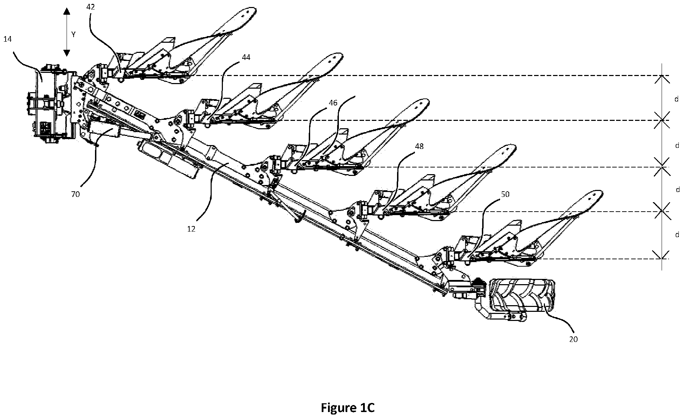

Tilling the field with the plough implement 10 in this first configuration provides a first furrow created by the first plough body 22a, a second furrow created by the second plough body 24a, a third furrow created by the third plough body 26a, a fourth furrow created by the fourth plough body 28a, and a fifth furrow created by the fifth plough body 30a. A furrow width is determined by the lateral distance d between the plough bodies 22a, 22b, 24a, 24b, 26a, 26b, 28a, 28b, 30a, 30b, as illustrated in Figure 1C. The lateral distance d between the plough bodies may be adjusted by a plough-width-adjustment-actuator 70, which in this embodiment is a hydraulic cylinder. The plough-width-adjustment actuator 70 is configured to change the angle of the main frame 12 with respect to the direction of travel. It will be understood that the lateral distance d between the plough bodies 22a, 22b, 24a, 24b, 26a, 26b, 28a, 28b, 30a, 30b generally increases when the angle is increased and vice versa. Moreover, the lateral position of the main frame 12 may be adjusted by means of a first-furrow-adjustment actuator (not shown), which may be used to shift the main frame and thus the plough bodies 22a, 22b, 24a, 24b, 26a, 26b, 28a, 28b, 30a, 30b laterally, in a direction Y shown in Figure 1C, with respect to the headstock 14.

As the reversible plough implement 10 reaches the end of the first run, the main frame 12 is rotated by 180 degrees (reversed) with respect to the headstock 14. A turning cylinder (not shown), attached to the headstock 14 may be used to rotate (reverse) the plough implement 10. During rotation of the main frame, the first plurality of plough bodies, e.g. 22a, 24a, 26a, 28a, 30a, are transferred to the top of the plough implement 10. At the same time, the second plurality of plough bodies e.g. 22b, 24b, 26b, 28b, 30b, which were not in use in the previous run, is then transferred to the lower end of the plough implement 10 and will be submerged in the soil during the next run. The reversible plough is then in its second configuration (not shown).

Executing a second run of the field with the plough implement 10 in this second configuration provides a first furrow created by the sixth plough body 22b, a second furrow created by the seventh plough body 24b, a third furrow created by the eighth plough body 26b, a fourth furrow created by the ninth plough body 28b, and a fifth furrow created by the tenth plough body 30b.

Reversing the plough implement 10 between consecutive runs has the advantage that the plough bodies 22a, 22b, 24a, 24b, 26a, 26b, 28a, 28b, 30a, 30b that engage the soil always face the same side edge of the main field 3, irrespective of the agricultural work vehicle's orientation.

In both configurations of the plough implement 10 the main frame 12 is supported by an implement wheel 20. The implement wheel 20 is arranged at the back end 18 of the plough implement 10. A linkage 62 provided between the implement wheel 20 and the main frame 12 allows the operator to lift or lower the main frame 12 with respect to a ground surface 80. The linkage 62 may be connected to an actuator, e.g. a hydraulic cylinder (not shown), for adjusting the distance between the implement wheel 20 and the main frame, thereby lifting and lowering the main frame.

In order to move the agricultural machinery between a garage (or any other storage facility) and the work area 1 or between distant work areas, the plough implement also has a transport position. Similar to the headland/transfer position, all of the ground engaging tools of the plough implement 10, such as the plough bodies 22a, 22b, 24a, 24b, 26a, 26b, 28a, 28b, 30a, 30b and the skimmers 32a, 32b, 34a, 34b, 36a, 36b, 38a, 38b, 40a, 40b are lifted off the ground by the agricultural work vehicle in the transport position. In particular, the plough implement may be lifted off the ground by a pair of lifting arms and/or a top-link connecting the agricultural work vehicle 7 to the headstock of the plough implement 10. The present disclosure is concerned with systems and methods for controlling agricultural machinery, particularly but not exclusively during transport, i.e. when the agricultural machinery is driven to and from the work areas. In more detail, the present disclosure is concerned with agricultural machinery and methods for controlling agricultural machinery to dampen inadvertent movements between the agricultural work vehicle and the implement, particularly but not exclusively, during transport. Such movements can be undesirable as they can cause operator discomfort or possibly injuries. Inadvertent movements of the agricultural implement during transport may further be a hazard to other road users, and in some instances can result in damage to the plough implement and / or the agricultural work vehicle.

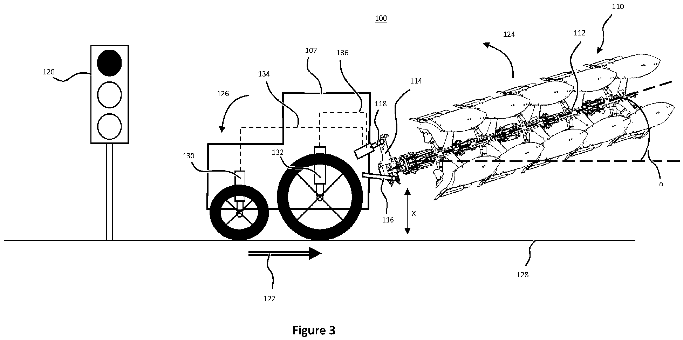

Turning to Figure 3, there is shown a schematic of agricultural machinery in its transport configuration. The agricultural machinery 100 of Figure 3 comprises an agricultural work vehicle 107 and an agricultural implement 110. The agricultural implement 110 may be a plough implement, such as the plough implement 10 shown in Figures 1A to 1C. The agricultural implement 110 is connected to the rear of the agricultural work vehicle 107 via its headstock 114. In particular, a lower end of the headstock 114 is connected to a pair of lifting arms 116 (only one lifting arm is illustrated). An opposite, upper end of the headstock 114 is connected to a top-link 118. Both the pair of lifting arms 116 and the top-link 118 may include hydraulic actuators, which do not form part of the invention. The hydraulic actuators of the lifting arms 116may be used to change the vertical position of the agricultural implement 110 as indicated by arrow X. The one or more hydraulic actuators of the top-link 118 may be used to pivot the agricultural implement 110 in a vertical plane with respect to the agricultural work vehicle 107, and thus change an angle α of the main frame 112 with respect to the horizontal direction.

Figure 3 illustrates a situation, in which the agricultural work vehicle 107 approaches a traffic light 120, which is in a "red" state. Due to the presence of the red traffic light 120, the agricultural work vehicle 107 will decelerate as indicated by the arrow 122. As will be appreciated, deceleration of the agricultural work vehicle 107 will also affect the agricultural implement 110. The inertia of the agricultural implement 110 will try to maintain movement of the agricultural implement 110 in the direction of travel, causing a momentum 124 that will be transferred onto the agricultural work vehicle 107 via the headstock 114 and so cause additional weight on the front suspension 130 of the agricultural work vehicle 107 as indicated by arrow 126. In fast braking operations, the momentum 124 will be significant, therefore possibly causing damage to the agricultural work vehicle suspension or even causing the rear wheels of the agricultural work vehicle 107 to lift off the road surface 128.

To prevent excessive momenta being transferred from the agricultural implement 110 onto the agricultural work vehicle 107, the present disclosure suggests to automatically activate an operation of at least one of the existing actuators of the agricultural implement 110, particularly in response to an activation of the agricultural work vehicle suspension. In other words, the present disclosure relates to reactive damping of the agricultural work vehicle.

Turning back to Figure 3, a braking event will cause a force indicated by arrow 126 applied to the front suspension 130 that will cause the front suspension 130 to compress. It should be appreciated that the front suspension 130 of the agricultural work vehicle 107 in Figure 3 is only schematically represented by a single shock absorber. However, in reality a variety of shock absorbers and springs and/or other suspension devices may be employed. The front suspension may be based of any suitable kind, such as mechanical, hydraulic, pneumatic, electric suspensions, or combinations thereof.

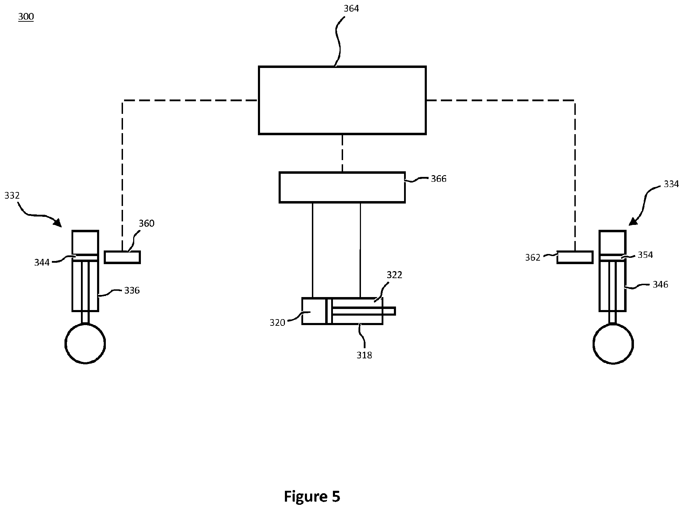

The front suspension 130 is functionally connected to at least one of the actuators of the agricultural machinery 100. The wording "functionally connected" or "functional connection" in this specification refers to any connection between the suspension system of the agricultural work vehicle 107 and at least one of the actuators that allows for the actuator to be activated based on/in response to an operational state of the suspension system of the agricultural work vehicle 107. In other words "functionally connected" may refer to the at least one actuator being in communication with the suspension system so as to activate one or more of the actuators in response to an activation of the suspension system. As will be described in more detail below, this functional connection may be a hydraulic connection in which actuation of the vehicle suspension (directly) drives a hydraulic actuation of the at least one actuator (cf. Figure 4). Alternatively or additionally, the functional connection may be electrical, in which case a control unit will monitor the operational state of the vehicle suspension and (indirectly) initiate actuation of the at least one actuator if the vehicle suspension is activated (cf. Figure 5). It should be understood that in case of an electrical connection, the at least one actuator may still be actuated in any known manner, such as hydraulically, electronically, or pneumatically.

In the example of Figure 3, the front suspension 130 is functionally connected to the hydraulic actuator of the top-link 118, as indicated by dashed line 134. As will be described in more detail below, the functional connection between the front suspension 130 and the actuator of the top-link 118 may, for example, be of a hydraulic and/or an electrical nature. The front suspension 130 is functionally connected to the actuator of the top-link 118 in such a way that following an activation of the front suspension 130, the system will react by activating the actuator of the top-link 118.

As mentioned above, the actuator of the top-link 118 is a hydraulic cylinder that is capable of pivoting the agricultural implement 110 with respect to the agricultural work vehicle 107. Alternatively, the actuating mechanism of the top-link actuator may be of any other type, such as electric, or pneumatic, in which case the functional connection may change.

In the embodiment of Figure 3, the agricultural implement 110 is pivoted in a clockwise direction, i.e. the angle α decreases, if the top-link actuator is extended. If, in turn, the actuator of the top-link 118 is retracted, then the agricultural implement 110 is pivoted in an anti-clockwise direction, such that the angle α will increase.

In the scenario illustrated in Figure 3, i.e. during a braking event, the front suspension 130 will compress and dampen the inertia created by the combined weight of the agricultural work vehicle 107 and the agricultural implement 110. In order to reduce the force (arrow 126) acting on the front suspension 130, the front suspension 130 is functionally connected to the top-link actuator in such a way that the top-link actuator will extend in reaction to a compression of the front suspension 130.

In one embodiment (e.g. the embodiment described with reference to Figure 4), the functional connection 134 between the front suspension 130 and the actuator of the top-link 118 may be by a hydraulic line that allows hydraulic fluid to be shared between a hydraulic shock absorber of the front suspension 130 and the hydraulic actuator of the top-link 118. In other words, hydraulic fluid displaced from the hydraulic shock absorber of the front suspension 130 may be directed towards the hydraulic actuator of the top-link 118 to cause the latter to extend, as will be described in more detail with regard to Figure 4. Alternatively, the functional connection 134 between the front suspension 130 and the top-link actuator may be of an electrical nature, such that an actuation signal is transferred to the actuator of the top-link 118, once the front suspension is activated. In this case, which is described in more detail with reference to Figure 5, actuation of the front suspension 130 will not directly drive an actuation of the top-link actuator; rather, an actuation signal may be generated when the front suspension 130 is activated (e.g. by means of an actuation sensor) and provided to a control unit, which will then indirectly initiate an actuation of the top-link actuator in response.

Similar to the front suspension 130, a rear suspension 132 of the agricultural work vehicle 107 is functionally connected to the top-link actuator, as indicated by a dashed line 136. The functional connection between the rear suspension 132 of the top-link 118 may again be of a hydraulic or electrical kind. The rear suspension 132 might be functionally connected to the actuator of the top-link 118 such that a compression of the rear suspension will cause the top-link actuator to retract.

The rear suspension 132 is schematically represented in Figure 3 with a single shock absorber. However, it will be understood that the rear suspension 132 may also have a variety of suspension devices known in the art.

It should be noted that the schematic illustration of Figure 3 highlights the concept of reactive damping in response to an actuation of the suspension system of the agricultural work vehicle. Although the front and rear suspensions 130, 132 in Figure 3 are illustrated connected to the actuator of the top-link 118 only, it should be understood that this is not part of the present invention, and not intended to be limiting to the present disclosure. Rather, the suspension of the agricultural work vehicle may be functionally connected to any of the actuators of the agricultural implement 110 that are adapted to move at least a component, such as the main frame 112 or one or more of the ground engaging tools, of the agricultural implement 110. A non-exhaustive list of alternative actuators that may be functionally connected to the suspension of the work vehicle can be found below.

It should be appreciated that each of the actuators is configured to move one or more components of the agricultural implement 110 with respect to the agricultural work vehicle 107. Generally, each of the below described actuators will at least cause direct or indirect movement of one of the ground engaging tools (e.g. the plough bodies) of the agricultural implement 110 with respect to the agricultural work vehicle 107. However, in some variants, the agricultural machinery 100 of the present disclosure may alternatively or additionally comprise actuators that will not change the position of the ground engaging tools but other components, such as the implement wheel 20 of Figure 1A.

Movement of one or more components of the agricultural implement by means of one or more actuators will change the position of the centre of gravity of the agricultural implement. Changing the position of the centre of gravity of the agricultural implement may help to prevent excessive rotational momenta being transferred from the agricultural implement 110 onto the agricultural work vehicle 107. For example, moving one or more components of the agricultural work vehicle such that the centre of gravity of the agricultural work vehicle 107 of Figure 3 is lowered during a braking event may significantly reduce the rotational inertia of the agricultural implement 110. This may be due to the rotational inertia (momentum) being partly or fully transformed into a linear inertia (momentum) acting in the direction of travel.

A first alternative to the top-link actuator discussed in Figure 3 may be one or more actuators of the lifting arms 116 for raising and lowering the plough implement particularly as indicated by arrow X in Figure 3.

Another alternative may be to activate a plough-width-adjustment-actuator in response to the suspension system. During normal use, the plough-width-adjustment-actuator may be for pivoting the agricultural implement in a horizontal plane, as shown in connection with the plough-width-adjustment-actuator 70 in Figure 1C.

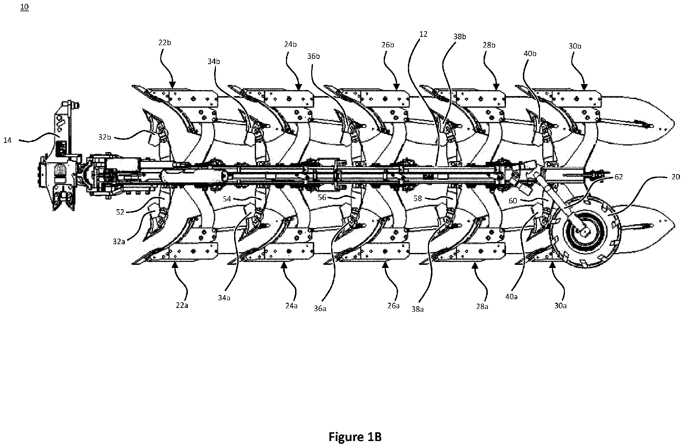

A depth-adjustment-actuator may be activated in response to an activation of the suspension system. The depth-adjustment-actuator may be for adjusting the working depth of one or more of the plough bodies and/or the skimmers during use. This could be the hydraulic cylinder connected to the linkage 62 provided between the implement wheel 20 and the main frame 12, shown in Figure 1B. Alternatively, this could be hydraulic actuators arranged between the plough bodies/skimmers and the main frame to individually adjust a distance between the plough bodies/skimmers and the main frame 112.

A stone-trip-actuator may be activated in response to the suspension system. Stone-trip-actuators may be for biasing the plurality of plough bodies into a predetermined working position (e.g. parallel with the main frame of the plough implement) during use. To this end, stone-trip-actuators can typically vary a bias force counter-acting a tendency of an associated plough body to pivot with respect to the main frame 112 during normal use. Such hydraulic, stone-trip actuators are shown in the example of Figure 1A and labelled with reference signs, 82, 84, 86, 88, and 90. The stone-trip-actuators may be used to vary the bias force during transport, which in some examples can actively pivot one or more of the plough bodies with respect to the main frame 112 in response to an actuation of the suspension system. Alternatively, varying the bias force of a stone-trip-actuator can enable the associated plough bodies to move more or less easily when they experience a force caused by the activation of the suspension system.

A roll-over-actuator may be activated in response to the suspension system. Roll-over-actuators are typically employed for reversing the agricultural implement during use. Although not specifically derivable from any of the Figures, such a roll-over actuator may be a hydraulic cylinder arranged on the headstock of the agricultural implement and suitable for transferring (i.e. reversing) the reversible plough implement between its first and its second configuration described above.

A first-furrow-adjustment-actuator (not shown) may be activated in response to the suspension system. The first-furrow-adjustment-actuator may be for shifting the main frame 12 (Figure 1C) in a lateral direction as indicated by arrow Y with respect to the headstock 14.

Any of the above example actuators may be implemented as hydraulic, pneumatic, electrical or mechanical actuators capable of moving one or more of the ground engaging tools of the agricultural implement with respect to the agricultural work vehicle. One or more of these actuators may be hydraulically, electrically or mechanically connected to the suspension of the agricultural work vehicle 107, so as to activate in response to a compression or extension of the vehicle suspension.

It will be appreciated that the present disclosure is also not restricted to braking events alone. Rather, the present disclosure relates to reactive damping of any change in the agricultural implement's speed and/or direction of motion during transport or indeed during field operation (e.g. on uneven soil) and thus to a change of the position of one or more components of the agricultural implement (e.g. the position of the main frame and/or the ground engaging tools) to minimise the impact of the change in speed and/or direction of motion.

Turning to Figure 4, there is shown a simplified hydraulic schematic of a vehicle suspension connected to actuators of the agricultural machinery. The hydraulic system 200 shows a shock absorber that is part of a front suspension 232 of an agricultural work vehicle. The shock absorber of Figure 4 includes a hydraulic cylinder 236 and a throttle 238. It will be appreciated that the hydraulic cylinder 236 and the throttle 238 are typically included in a single device and are only represented schematically in Figure 4. The hydraulic cylinder 236 has a first piston-side chamber 240 separated from a second rod-side chamber 242 by a piston 244.

The hydraulic system 200 further shows a shock absorber of a rear suspension 234 of an agricultural work vehicle. The shock absorber of the rear suspension 234 comprises a hydraulic cylinder 246 and a throttle 248 that may be incorporated into a single device. The hydraulic cylinder 246 comprises a first piston-side chamber 250 separated from a second rod-side chamber 252 by a piston 254. Of course, the front and rear suspension 232, 234 may both include more hydraulic cylinders than the first and second hydraulic cylinders 236, 246 respectively.

A hydraulic actuator 218 for moving one or more of the ground engaging tools with respect to the agricultural work vehicle is schematically represented in Figure 4. The hydraulic actuator 218 comprises a first piston-side chamber 220 separated from a second rod-side chamber 222 by a piston 224. In one example, not forming part of the present invention, the hydraulic actuator 218 may be the actuator of the top-link 118 shown in Figure 3.

The hydraulic cylinder 236 of the front suspension 232 is connected to the hydraulic actuator 218 in such a way that a compression of the hydraulic cylinder 236 will cause an extension of the hydraulic actuator 218. To this end, the first chamber 240 of the hydraulic cylinder 236 of the front suspension 232 is connected hydraulically to the first chamber 220 of the hydraulic actuator 218. The second chamber 242 of the hydraulic cylinder 236 is, in turn, connected to the second chamber 222 of the hydraulic actuator 218.

If the hydraulic cylinder 236 of the front suspension 232 is compressed, e.g. during a braking event, the piston 244 will travel towards the first chamber 240, thereby expelling hydraulic fluid from the first chamber 240. The hydraulic fluid in the first chamber 240 of the hydraulic cylinder 236 is then transferred towards the first chamber 220 of the hydraulic actuator 218, via throttle 238. The flow resistance of throttle 238 will define the damping characteristics of the shock absorber of the front suspension 232. As fluid is pushed out of the first chamber 240 of the hydraulic cylinder 236 and transferred into the first chamber 220 of the hydraulic actuator 218, the piston 224 of the hydraulic actuator 218 is pushed towards the second chamber 222, thereby extending the hydraulic actuator 218.

In the example of Figure 3, and not forming part of the invention, an extension of the hydraulic actuator of the top-link 118 will cause the agricultural implement 110 to pivot in a clockwise direction, thereby reducing the angle α and thus reducing the force applied on the front suspension by reducing the inertia of the agricultural implement 110. Fluid pushed out of the second chamber 222 may be transferred into the second chamber 242 of the hydraulic cylinder 236 via a pilot-operated check-valve 256. The pilot operated check-valve 256 is positioned between the second chamber 222 of the hydraulic actuator 218 and the second chamber 242 of the hydraulic cylinder 236. Another pilot-operated check-valve 260, which is arranged between the first chamber 220 of the hydraulic actuator 218 and the second chamber 252 of the hydraulic cylinder 246 of the rear suspension 234, prevents hydraulic fluid transferred into the first chamber 220 of the hydraulic actuator 218 from being transferred into the second chamber 252 of the hydraulic cylinder 246, during contraction of the front suspension 232.

The hydraulic cylinder 246 of the rear suspension 234 is connected to the hydraulic actuator 218 in such a way that a compression of the hydraulic cylinder 246 will cause a retraction of the hydraulic actuator 218. To this end, the first chamber 250 of the hydraulic cylinder 246 of the rear suspension 234 is connected hydraulically to the second chamber 222 of the hydraulic actuator 218. The second chamber 252 of the hydraulic cylinder 246 is, in turn, connected to the first chamber 220 of the hydraulic actuator 218.

If the hydraulic cylinder 246 of the rear suspension 234 is compressed, e.g. during an acceleration event, the piston 254 will travel towards the first chamber 250, thereby expelling hydraulic fluid from the first chamber 250. The hydraulic fluid in the first chamber 250 of the hydraulic cylinder 246 is then transferred towards the second chamber 222 of the hydraulic actuator 218, via throttle 248. The flow resistance of throttle 248 will define the damping characteristics of the shock absorber of the rear suspension 234. As fluid is pushed out of the first chamber 250 of the hydraulic cylinder 246 and transferred into the second chamber 222 of the hydraulic actuator 218, the piston 224 of the hydraulic actuator 218 is pushed towards the first chamber 220, thereby retracting the hydraulic actuator 218.

In the example of Figure 3, and not forming part of the invention, retraction of the hydraulic actuator of the top-link 118 will cause the agricultural implement 110 to pivot in an anti-clockwise direction. Fluid pushed out of the first chamber 220 may be transferred into the second chamber 252 of the hydraulic cylinder 246 via a pilot-operated check-valve 260. The pilot operated check-valve 260 is positioned between the first chamber 220 of the hydraulic actuator 218 and the second chamber 252 of the hydraulic cylinder 246. The pilot-operated check-valve 256, which is arranged between the second chamber 222 of the hydraulic actuator 218 and the second chamber 242 of the hydraulic cylinder 236 of the front suspension 232, prevents hydraulic fluid transferred into the second chamber 222 of the hydraulic actuator 218 from being transferred into the second chamber 242 of the hydraulic cylinder 236, during contraction of the rear suspension 234.

The hydraulic system 200 shown in Figure 4 is based on a direct transfer of hydraulic fluid between the agricultural work vehicle suspension and one or more hydraulic actuators for moving the ground engaging tools with respect to the agricultural work vehicle. Accordingly, the one or more actuators will move one or more of the ground engaging tools of the agricultural implement with respect to the agricultural work vehicle as a direct response to the front or rear suspension of the agricultural work vehicle being activated.

It will be appreciated that the hydraulic schematic of Figure 4 may be suitable for damping during acceleration and deceleration events. However, other motion events during use of the agricultural machinery, such as navigating an unevenness on the road surface (e.g. due to a speed bump), may require different hydraulic connections between the chambers 240, 242, 250, 252 of the front and/or rear suspensions 232, 234 with the chambers 220, 222 of the one or more actuators (e.g. the hydraulic actuator 218), compared to the hydraulic connections shown in Figure 4. Accordingly, the shock absorbers of Figure 4 may also be connected to the one or more actuators via one or more directional control valve that may be controlled by a control unit on the basis of the damping requirements necessitated by the current motion event.

Figure 5 schematically illustrates an electro-hydraulic (functional) connection between the suspension system and at least one actuator. The system 300 shown in Figure 5 schematically includes a first hydraulic cylinder 336 acting as a shock absorber of the front suspension 332 and a second hydraulic cylinder 346 acting as a shock absorber of the rear suspension 334. Of course, the front and rear suspension may both include more hydraulic cylinders than the first and second hydraulic cylinders 336, 346 respectively.

Both hydraulic cylinders 336, 346 are associated with a corresponding sensor device 360, 362 for monitoring the position of the pistons 344, 354 of the hydraulic cylinders 336, 346. A first sensor device 360 is provided for determining the position of the hydraulic cylinder 336 of the front suspension 332. In the embodiment shown in Figure 5, this is realised by means of a contactless sensor device 360 that monitors the position of the piston 344 of the hydraulic cylinder 336. Similarly, a contactless sensor 362 is provided at the rear suspension 334 to monitor the position of the piston 354 of the hydraulic cylinder 346.

As the hydraulic cylinder 336 of the front suspension is activated, e.g. being compressed or extended, the position of the piston 344 within the cylinder changes. This change of position will be detected by the sensor device 360. A control unit 364 is connected to the sensor device 360 to receive position-data from the sensor device 360. The position-data is indicative of the position of the piston 344 within the hydraulic cylinder. In one example, the position-data may be binary-data that is indicative of whether or not the first hydraulic cylinder 336 is in a resting position. Alternatively, the position-data may comprise displacement measurements indicative of an exact location of the piston 344 within the first hydraulic cylinder 336. The position-data may also be indicative of a direction of displacement of the piston 344. In other words, the position-data may be indicative of whether the hydraulic cylinder 336 is extended or compressed.

The control unit 364 is configured to receive the position-data and determine, on the basis of the position-data, if the front suspension 332 has been activated. To this end, the control unit may compare displacement values of the position-data to one or more piston-displacement-thresholds that are indicative of substantial movement of the piston 344, i.e. activation of the front suspension 332. If the displacement values exceed a piston-displacement-threshold, the control unit may determine a control-signal for activation of one or more of the actuators of the agricultural implement, as will be described in more detail below.

Similar to the sensor device 360 of the front suspension, a sensor device 362 may be associated with the second hydraulic cylinder 346 of the rear suspension 334. The sensor device 362 of the rear suspension 344 may monitor the displacement of a piston 354 of the second hydraulic cylinder 346. The sensor device 362 of the rear suspension 344 may provide the control unit 364 with position-data that is indicative of a displacement of the piston 354 of the second hydraulic cylinder 346. The control unit 364 may be configured to process the position-data received from the sensor device 362 of the rear suspension 334 in a similar way to the position-data received from the sensor device 360 of the front suspension 332. Accordingly, if the control-unit determines an activation of the rear suspension, the control unit may determine a control-signal for activation of one or more of the actuators of the agricultural implement, as will be described in more detail below

Based on the sensor-data provided by either one or both of the sensor devices 360, 362, the control unit may activate one or more of the actuators of the agricultural implement. To this end, the control unit may determine a control-signal that is applicable to cause activation of one or more of the actuators of the agricultural implement. In the example of Figure 5, the control unit 364 will activate a hydraulic actuator 318 on the basis of the sensor signals received from the sensor devices 360, 362 of the vehicle suspension. In particular, the control unit 364 may provide the control-signal to a hydraulic supply circuit 366. The control-signal may cause the hydraulic supply circuit 366 to supply an appropriate amount of hydraulic fluid to one or more of the actuators of the agricultural implement, e.g. the hydraulic actuator 318 shown in Figure 5.

In the example of Figure 5, the hydraulic actuator 318 is a top-link actuator, such as the actuator of the top-link 118 shown in Figure 3, and is in this case not part of the present invention. The hydraulic supply circuit 366 is configured to activate, i.e. extend or retract, the hydraulic actuator 318 on basis of the control-signal received from the control unit 364. For instance, the control-signal may cause actuation of one or more fluid flow control components within the hydraulic supply circuit 366.

In the example of a braking event described in connection with Figure 3, a compression of the hydraulic cylinder 336 of the front suspension 332 (i.e. a movement of piston 344 towards the piston-side chamber) will be determined by the sensor device 360 that will then provide the control unit 364 with corresponding sensor-data (position-data). Based on the sensor-data received from the sensor device 360, the control unit 364 will determine an appropriate way of moving the ground engaging tools with respect to the agricultural work vehicle in order to reduce the impact of the inertia of the agricultural implement.

The control-unit may either look-up or calculate an appropriate control-signal for activation of one or more of the actuators of the agricultural implement to achieve compensation of the momenta introduced by the braking event. The control unit may be configured to determine which of the actuators for moving the ground engaging tools of the agricultural implement is to be activated, on the basis of the sensor-data received. On the basis of the position-data (sensor-data) received from the sensor devices the control unit may determine which of the shock absorbers are activated to what extent. The control unit may thus determine suspension-activation-data indicative of which shock absorbers are activated and possibly to what extent. The control unit may selectively activate one or more of the actuators on the basis of the suspension-activation-data. If, for example, the control unit determines, on the basis of the suspension-activation-data, that the front suspension 332 is compressed and the rear suspension extended, the control unit may determine the presence of a braking event. The control-unit may then generate a control-signal for extending the top-link actuator discussed above. In this way, the sensor-data may represent a direction of displacement (for example, compression or extension) of a component of the suspension system. In another example, the front and the rear suspension may each comprise two shock absorbers, one on either side of the agricultural work vehicle. If the suspension-activation-data indicates that the left-side shock absorbers of the front and rear suspension are compressed and the right-side shock absorbers of the front and rear suspension are extended, the control unit may determine that the agricultural work vehicle is currently navigating a right-turn. The control-unit may then generate a control-signal for activating the roll-over-actuator so as to lean the agricultural plough towards the corner.

The control unit may also be configured to determine to what extent the one or more actuators should be moved on the basis of the sensor-data (position-data) received. That is, the control-signal may be representative of a target amount of displacement for each of the one or more actuators. In the embodiment of Figure 3, the control unit 364 may determine a control-signal that causes the hydraulic control system 366 to partly or fully extend the hydraulic actuator 318 so as to pivot the agricultural implement in a clockwise direction. In response to the control-signal, the hydraulic supply circuit 366 may provide pressurised hydraulic fluid towards the first chamber 320 of the hydraulic actuator 318 in order to extend the top-link actuator.

In the case of an acceleration event, the hydraulic cylinder 346 of the rear suspension 334 will be compressed. This compression will be determined by the sensor device 362 and corresponding sensor-data provided to the control unit 364. Based on the sensor-data received from the sensor device 362, the control unit 364 may determine an appropriate control-signal and provide the control-signal to the hydraulic supply system 366. The control-signals will cause the hydraulic supply system 366 to retract the hydraulic actuator 318 by providing pressurised fluid towards the second rod-side chamber 322 of the hydraulic actuator 318.

Of course, it should be appreciated that the control unit 364 may determine control-signals for simultaneous actuation of more than one actuator of the agricultural machinery in response to an activation of the vehicle suspension. It should also be understood that the actuators of the agricultural machinery are not necessarily of the hydraulic type but could also be pneumatic, electrical, mechanical actuators, or combinations thereof. If one or more of the actuators of the agricultural machinery are of the electric type, the control unit may determine an electric-actuation-signal for direct actuation of the at least one electric actuator when the suspension system is activated. Alternatively, the control unit may determine a control-signal that is provided to an electric supply circuit of the at least one electric actuator.

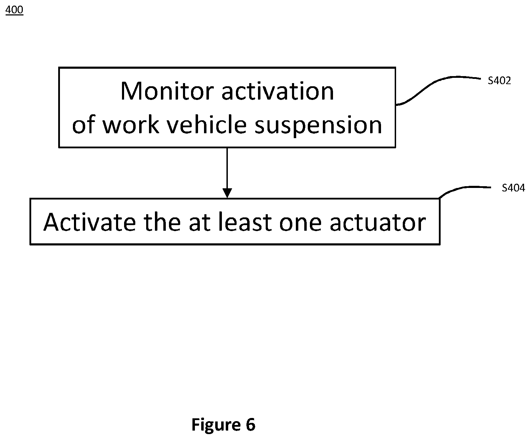

Turning to Figure 6, there is shown a method for controlling agricultural machinery according to an embodiment of the present disclosure. The method 600 may be used to dampen or control movements of the agricultural implement, e.g. of the ground engaging tools, with respect to the agricultural work vehicle. For example, if the agricultural machinery navigates public roads during transport between a work area and a garage, sudden changes in speed or direction may cause instability in the agricultural work vehicle that may lead to increased wear of vehicle parts and/or discomfort to the operator. The method of the present disclosure may dampen such effects.

In view of the above, the method 400 shown in Figure 6 includes a first step S402 for monitoring activation of the agricultural work vehicle suspension. As mentioned above, activation of the vehicle suspension may be detected as it occurs. Accordingly, the method may be considered as a re-active damping method.

In a second step S404, if the vehicle suspension is activated, at least one actuator for moving ground engaging tools of the agricultural implement is operated to compensate for the forces introduced into the system that caused activation of vehicle suspension. Of course, the method, in step S404, may also activate a plurality of actuators simultaneously. Actuation of the one or more actuators is effected to reduce the impact of the agricultural implement's inertia.

The second step S404 may be directly caused by the activation of the vehicle suspension, as described with reference to the example of Figure 4. In this embodiment, a control unit is not required for performing the present method. Rather, energy introduced into the vehicle suspension will be utilised to active actuators for moving the agricultural implement. Alternatively, activation of the vehicle suspension may be monitored by a control unit, as shown in the example of Figure 5. In this embodiment, the control unit will cause activation of step S404 upon determination of an activation of the vehicle suspension.

While the above has been described in relation to agricultural ploughs, it should be understood that the present disclosure is generally applicable to any agricultural machinery including one or more agricultural implements.

## Claims

1. Agricultural machinery comprising:
an agricultural work vehicle (107) comprising a suspension system;
an agricultural implement (110) connected to the agricultural work vehicle (107), the agricultural implement (110) comprising:
a plurality of ground engaging tools (22a, 22b, 24a, 24b, 26a, 26b, 28a, 28b, 30a, 30b) and
at least one actuator (70, 218, 318) for moving one or more components of the agricultural implement;
wherein the at least one actuator (70, 218, 318) is functionally connected to the suspension system of the agricultural work vehicle (107) so as to move one or more components of the agricultural implement in response to an activation of the suspension system.

2. The agricultural machinery of Claim 1, wherein the at least one actuator (70, 218, 318) is hydraulically and/or electrically and/or electro-hydraulically connectable to the suspension system of an agricultural work vehicle (107).

3. The agricultural machinery of Claim 1 or 2, wherein the agricultural machinery comprises an agricultural work vehicle (107) comprising a suspension system, and wherein the at least one actuator comprises a hydraulic actuator (70, 218, 318) and the suspension system comprises at least one hydraulic shock absorber, the hydraulic shock absorber being hydraulically connectable to the hydraulic actuator.

4. The agricultural machinery of Claim 3, wherein the hydraulic actuator (218, 318) is configured to extend in response to a compression of the hydraulic shock absorber and to retract in response to an extension of the hydraulic shock absorber.

5. The agricultural machinery of Claim 3 or 4, wherein the hydraulic actuator (218, 318) comprises a first piston-side chamber (220, 320) separated from a second rod-side chamber (222, 322) by a piston (224, 324), wherein the suspension system comprises a front suspension (232, 332) and a rear suspension (234, 334), and wherein hydraulic shock absorbers of the front and rear suspensions are hydraulically connected to the first and second chamber of the hydraulic actuator.

6. The agricultural machinery of Claim 5, wherein a hydraulic shock absorber of the front suspension (232) comprises a first piston-side chamber (240) separated from a second rod-side chamber (242) by a piston (244), wherein the first chamber (240) of the shock absorber is hydraulically connected to the first chamber (220) of the hydraulic actuator (218), and wherein the second chamber (242) of the shock absorber is hydraulically connected to the second chamber (222) of the hydraulic actuator (218).

7. The agricultural machinery of Claim 6, wherein a hydraulic shock absorber of the rear suspension (234) comprises a first piston-side chamber (250) separated from a second rod-side chamber (252) by a piston (254), wherein the first chamber (250) of the shock absorber is hydraulically connected to the second chamber (222) of the hydraulic actuator (218), and wherein the second chamber (252) of the shock absorber is hydraulically connected to the first chamber (220) of the hydraulic actuator (218).

8. The agricultural machinery of any of Claims 1 to 7, wherein the agricultural machinery comprises an agricultural work vehicle (107) comprising a suspension system, wherein the suspension system comprises a sensor device (360, 362) for determining a sensor-data indicative of an activation of the suspension system, and wherein the agricultural machinery comprises a control unit that is configured to:
receive the sensor-data from the sensor device (360, 362); and
determine a control-signal for activating the at least one actuator on the basis of the sensor-data.

9. The agricultural machinery of any of Claims 1 to 8, wherein the at least one actuator comprises one or more of:
a plough-width-adjustment (70) actuator for moving the ground engaging tools in a lateral direction;
a depth-adjustment-actuator for adjusting the working depth of one or more of the ground engaging tools;
a stone-trip-actuator for biasing one or more of the ground engaging tools into a predetermined working position;
a roll-over-actuator for reversing the agricultural implement; and
a first-furrow-adjustment actuator.

10. The agricultural machinery of any of Claims 1 to 9, wherein the agricultural implement (110) is a fully-mounted agricultural implement, preferably a fully-mounted plough implement.

11. A method of controlling agricultural machinery, the agricultural machinery comprising:
an agricultural work vehicle (107) with a suspension system;
an agricultural implement connected to the work vehicle (107), the agricultural implement comprising a plurality of ground engaging tools (22a, 22b, 24a, 24b, 26a, 26b, 28a, 28b, 30a, 30b) and at least one actuator for moving one or more components of the agricultural implement; and
wherein the method comprises actively moving one or more components of the agricultural implement by activating the at least one actuator in response to an activation of the suspension system.

12. The method of Claim 11, wherein the method comprises transferring hydraulic fluid between the suspension system and the at least one hydraulic actuator in response to an activation of the suspension system.

13. The method of Claim 11 or 12, wherein the agricultural machinery comprises a sensor device (360, 362) for determining sensor-data indicative of an activation of the suspension system, and wherein the method comprises:
receiving sensor-data from the sensor device (360, 362); and
determining a control-signal for activating the at least one actuator on the basis of the sensor-data.

14. The method of any of Claims 11 to 13, wherein the suspension system comprises a plurality of shock absorbers and the agricultural machinery comprises a plurality of actuators for moving one or more of the ground engaging tools, and wherein the method comprises:
determining suspension-activation-data indicative of which of the shock absorbers is activated during use of the agricultural machinery in response to an activation of the suspension system;
selectively activating one or more of the plurality of actuators on the basis of the suspension-activation-data.

15. A control unit configured to control the at least one actuator (70, 218, 318) of an agricultural machinery of any of claims 1 to 10 to carry out the method of any of claims 11 to 14.

## Patentansprüche

1. Landwirtschaftliche Maschine mit:
einem landwirtschaftlichen Arbeitsfahrzeug (107), das ein Aufhängungssystem aufweist;
einem landwirtschaftlichen Arbeitsgerät (110), das mit dem landwirtschaftlichen Arbeitsfahrzeug (107) verbunden ist, wobei das landwirtschaftliche Arbeitsgerät (110) aufweist:
eine Mehrzahl von mit dem Boden eingreifenden Werkzeugen (22a, 22b, 24a, 24b, 26a, 26b, 28a, 28b, 30a, 30b); und
mindestens eine Betätigungseinrichtung (70, 218, 318) zum Bewegen von einer oder mehreren Komponenten des landwirtschaftlichen Arbeitsgeräts;
wobei die mindestens eine Betätigungseinrichtung (70, 218, 318) wirkend mit dem Aufhängungssystem des landwirtschaftliches Arbeitsfahrzeugs (107) verbunden ist, um die eine oder die mehreren Komponenten des landwirtschaftlichen Arbeitsgeräts in Reaktion auf eine Betätigung des Aufhängungssystems zu bewegen.

2. Landwirtschaftliche Maschine nach Anspruch 1, wobei die mindestens eine Betätigungseinrichtung (70, 218, 318) hydraulisch und/oder elektrisch und/oder elektro-hydraulisch mit dem Aufhängungssystem des landwirtschaftlichen Arbeitsfahrzeugs (107) verbindbar ist.

3. Landwirtschaftliche Maschine nach einem der Ansprüche 1 oder 2, wobei die landwirtschaftliche Maschine ein landwirtschaftliches Arbeitsfahrzeug (107) mit einem Aufhängungssystem aufweist, und wobei die mindestens eine Betätigungseinrichtung eine hydraulische Betätigungseinrichtung (70, 218, 318) aufweist und das Aufhängungssystem mindestens einen hydraulischen Dämpfer aufweist, wobei der hydraulische Dämpfer hydraulisch mit der hydraulischen Betätigungseinrichtung verbindbar ist.

4. Landwirtschaftliche Maschine nach Anspruch 3, wobei die hydraulische Betätigungseinrichtung (218, 318) dazu eingerichtet ist, in Reaktion auf eine Kompression des hydraulischen Dämpfers auszufahren und in Reaktion auf ein Ausfahren des hydraulischen Dämpfers einzufahren.

5. Landwirtschaftliche Maschine nach einem der Ansprüche 3 oder 4, wobei die hydraulische Betätigungseinrichtung (218, 318) eine erste Kolben-Seitenkammer (220, 320) aufweist, die von einer zweiten Stangen-Seitenkammer (222, 322) durch einen Kolben (224, 324) getrennt ist, wobei das Aufhängungssystem eine vordere Aufhängung (232, 332) und eine hintere Aufhängung (234, 334) aufweist, und wobei hydraulische Dämpfer der vorderen und der hinteren Aufhängung hydraulisch mit der ersten und der zweiten Kammer der hydraulischen Betätigungseinrichtung verbunden sind.

6. Landwirtschaftliche Maschine nach Anspruch 5, wobei ein hydraulischer Dämpfer der vorderen Aufhängung (232) eine erste Kolben-Seitenkammer (240) aufweist, die von einer zweiten Stangen-Seitenkammer (242) durch einen Kolben (244) getrennt ist, wobei die erste Kammer (240) des Dämpfers hydraulisch mit der ersten Kammer (220) der hydraulischen Betätigungseinrichtung (218) verbunden ist, und wobei die zweite Kammer (242) des Dämpfers hydraulisch mit der zweiten Kammer (222) der hydraulischen Betätigungseinrichtung (218) verbunden ist.

7. Landwirtschaftliche Maschine nach Anspruch 6, wobei ein hydraulischer Dämpfer der hinteren Aufhängung (234) eine erste Kolben-Seitenkammer (250) aufweist, die von einer Stangen-Seitenkammer (252) durch einen Kolben (254) getrennt ist, wobei die erste Kammer (250) des Dämpfers hydraulisch mit der zweiten Kammer (222) der hydraulischen Betätigungseinrichtung (218) verbunden ist, und wobei die zweite Kammer (252) des Dämpfers hydraulisch mit der ersten Kammer (220) der hydraulischen Betätigungseinrichtung (218) verbunden ist.

8. Landwirtschaftliche Maschine nach einem der Ansprüche 1 bis 7, wobei die landwirtschaftliche Maschine ein landwirtschaftliches Arbeitsfahrzeug (107) aufweist, das ein Aufhängungssystem aufweist, wobei das Aufhängungssystem eine Sensorvorrichtung (360, 362) zum Bestimmen von Sensordaten aufweist, die kennzeichnend für ein Betätigen des Aufhängungssystem sind, und wobei die landwirtschaftliche Maschine eine Steuereinheit aufweist, die eingerichtet ist zum:
Empfangen der Sensordaten von der Sensorvorrichtung (360, 362); und
Bestimmen eines Steuersignals zum Betätigen der mindestens einen Betätigungseinrichtung basierend auf den Sensordaten.

9. Landwirtschaftliche Maschine nach einem der Ansprüche 1 bis 8, wobei die mindestens eine Betätigungseinrichtung eine oder mehrere der folgenden Elemente aufweist:
eine Pflugweiten-Verstellungs-Betätigungseinrichtung (70) zum Bewegen der mit dem Boden eingreifenden Werkzeuge in einer lateralen Richtung;
eine Tiefen-Verstellungs-Betätigungseinrichtung zur Verstellung der Arbeitstiefe des einen oder der mehreren mit dem Boden eingreifenden Werkzeuge;
eine Steinschutz-Betätigungseinrichtung zum Vorspannen des einen oder der mehreren mit dem Boden eingreifenden Werkzeuge in eine vorbestimmte Arbeitsposition;
eine Schwenk-Betätigungseinrichtung zum Umdrehen des landwirtschaftlichen Arbeitsgeräts; und
eine Erst-Furchen-Verstellungs-Betätigungseinrichtung.

10. Landwirtschaftliche Maschine nach einem der Ansprüche 1 bis 9, wobei das landwirtschaftliche Arbeitsgerät (110) ein vollständig befestigtes landwirtschaftliches Arbeitsgerät, vorzugsweise ein vollständig befestigtes Pflugarbeitsgerät ist.

11. Verfahren zum Steuern einer landwirtschaftlichen Maschine, wobei die landwirtschaftliche Maschine aufweist:
ein landwirtschaftliches Arbeitsfahrzeug (107) mit einem Aufhängungssystem;
ein landwirtschaftliches Arbeitsgerät, das mit dem Arbeitsfahrzeug (107) verbunden ist, wobei das landwirtschaftliche Arbeitsgerät eine Mehrzahl von mit dem Boden eingreifenden Werkzeuge (22a, 22b, 24a, 24b, 26a, 26b, 28a, 28b, 30a, 30b) und mindestens eine Betätigungseinrichtung zum Bewegen einer oder mehrerer Komponenten des landwirtschaftlichen Arbeitsgeräts aufweist; und
wobei das Verfahren ein aktives Bewegen der einen oder der mehreren Komponenten des landwirtschaftlichen Arbeitsgeräts durch Betätigen der mindestens einen Betätigungseinrichtung in Reaktion auf ein Betätigen des Aufhängungssystem aufweist.

12. Verfahren nach Anspruch 11, wobei das Verfahren ein Übertragen von Hydraulikflüssigkeit zwischen dem Aufhängungssystem und der mindestens einen hydraulischen Betätigungseinrichtung in Reaktion auf ein Betätigen des Aufhängungssystems aufweist.

13. Verfahren nach einem der Ansprüche 11 oder 12, wobei die landwirtschaftliche Maschine eine Sensorvorrichtung (360, 362) zum Bestimmen von Sensordaten aufweist, die kennzeichnend für ein Betätigen des Aufhängungssystems sind, und wobei das Verfahren die Schritte aufweist:
Empfangen von Sensordaten von der Sensorvorrichtung (360, 362); und
Bestimmen eines Steuersignals zum Betätigen der mindestens einen Betätigungseinrichtung basierend auf den Sensordaten.

14. Verfahren nach einem der Ansprüche 11 bis 13, wobei das Aufhängungssystem eine Mehrzahl von Dämpfern aufweist und die landwirtschaftliche Maschine eine Mehrzahl von Betätigungseinrichtungen zum Bewegen des einen oder der mehreren mit dem Boden eingreifenden Werkzeuge aufweist, wobei das Verfahren die Schritte aufweist:
Bestimmen von Aufhängungs-Betätigungs-Daten, die kennzeichnend dafür sind, welcher der Dämpfer während einer Verwendung der landwirtschaftlichen Maschine in Reaktion auf ein Betätigen des Aufhängungssystem betätigt wird;
wahlweises Betätigen der einen oder der mehreren der Mehrzahl von Betätigungseinrichtungen basierend auf den Aufhängungs-Betätigungs-Daten.

15. Steuereinheit, die dazu eingerichtet ist, die mindestens eine Betätigungseinrichtung (70, 218, 318) einer landwirtschaftlichen Arbeitsmaschine nach einem der Ansprüche 1 bis 10 zu steuern, um das Verfahren nach einem der Ansprüche 11 bis 14 auszuführen.

## Revendications

1. Machine agricole comprenant :
un véhicule de travail agricole (107) comprenant un système de suspension ;
un outil agricole (110) raccordé au véhicule de travail agricole (107), l'outil agricole (110) comprenant :
une pluralité d'outils d'engagement avec le sol (22a, 22b, 24a, 24b, 26a, 26b, 28a, 28b, 30a, 30b) et
au moins un actionneur (70, 218, 318) pour déplacer un ou plusieurs composants de l'outil agricole ;
dans laquelle l'au moins un actionneur (70, 218, 318) est fonctionnellement raccordé au système de suspension du véhicule de travail agricole (107) de manière à déplacer un ou plusieurs composants de l'outil agricole en réponse à une activation du système de suspension.

2. La machine agricole selon la Revendication 1, dans laquelle l'au moins un actionneur (70, 218, 318) peut être raccordé hydrauliquement et/ou électriquement et/ou électrohydrauliquement au système de suspension d'un véhicule de travail agricole (107).

3. La machine agricole selon la Revendication 1 ou la Revendication 2, dans laquelle la machine agricole comprend un véhicule de travail agricole (107) comprenant un système de suspension, et dans laquelle l'au moins un actionneur comprend un actionneur hydraulique (70, 218, 318) et le système de suspension comprend au moins un amortisseur de chocs hydraulique, l'amortisseur de chocs hydraulique pouvant être raccordé hydrauliquement à l'actionneur hydraulique.

4. La machine agricole selon la Revendication 3, dans laquelle l'actionneur hydraulique (218, 318) est configuré pour s'étendre en réponse à une compression de l'amortisseur de chocs hydraulique et pour se rétracter en réponse à une extension de l'amortisseur de chocs hydraulique.

5. La machine agricole selon la Revendication 3 ou la Revendication 4, dans laquelle l'actionneur hydraulique (218, 318) comprend une première chambre côté piston (220, 320) séparée d'une seconde chambre côté tige (222, 322) par un piston (224, 324), dans laquelle le système de suspension comprend une suspension avant (232, 332) et une suspension arrière (234, 334), et dans laquelle des amortisseurs de chocs hydrauliques des suspensions avant et arrière sont raccordés hydrauliquement à la première et à la seconde chambre de l'actionneur hydraulique.

6. La machine agricole selon la Revendication 5, dans laquelle un amortisseur de chocs hydraulique de la suspension avant (232) comprend une première chambre côté piston (240) séparée d'une seconde chambre côté tige (242) par un piston (244), dans laquelle la première la chambre (240) de l'amortisseur de chocs est raccordée hydrauliquement à la première chambre (220) de l'actionneur hydraulique (218), et dans laquelle la seconde chambre (242) de l'amortisseur de chocs est raccordée hydrauliquement à la seconde chambre (222) de l'actionneur hydraulique (218).

7. La machine agricole selon la Revendication 6, dans laquelle un amortisseur de chocs hydraulique de la suspension arrière (234) comprend une première chambre côté piston (250) séparée d'une seconde chambre côté tige (252) par un piston (254), dans laquelle la première la chambre (250) de l'amortisseur de chocs est raccordée hydrauliquement à la seconde chambre (222) de l'actionneur hydraulique (218), et dans laquelle la seconde chambre (252) de l'amortisseur de chocs est raccordée hydrauliquement à la première chambre (220) de l'actionneur hydraulique (218).

8. La machine agricole selon l'une quelconque des revendications 1 à 7, dans laquelle la machine agricole comprend un véhicule de travail agricole (107) comprenant un système de suspension, dans laquelle le système de suspension comprend un dispositif de détection (360, 362) pour déterminer des données de capteur indicatives d'une activation du système de suspension, et dans laquelle la machine agricole comprend une unité de commande qui est configurée pour :
recevoir les données de capteur du dispositif de détection (360, 362) ; et
déterminer un signal de commande pour activer l'au moins un actionneur sur la base des données de capteur.

9. La machine agricole selon l'une quelconque des revendications 1 à 8, dans laquelle l'au moins un actionneur comprend un ou plusieurs parmi :
un actionneur pour le réglage de la largeur de labour (70) pour déplacer les outils d'engagement avec le sol dans un sens latéral ;
un actionneur pour le réglage de la profondeur pour régler la profondeur de travail d'un ou de plusieurs des outils d'engagement avec le sol ;
un actionneur pour le déclenchement en cas de pierre pour solliciter un ou plusieurs des outils d'engagement avec le sol dans une position de travail prédéterminée ;
un actionneur de retournement pour inverser l'outil agricole ; et
un actionneur de réglage du premier sillon.

10. La machine agricole selon l'une quelconque des revendications 1 à 9, dans laquelle l'outil agricole (110) est un outil agricole entièrement monté, de préférence un outil de labour entièrement monté.

11. Un procédé de commande de machine agricole, la machine agricole comprenant :
un véhicule de travail agricole (107) avec un système de suspension ;
un outil agricole raccordé au véhicule de travail (107), l'outil agricole comprenant une pluralité d'outils d'engagement avec le sol (22a, 22b, 24a, 24b, 26a, 26b, 28a, 28b, 30a, 30b) et au moins un actionneur pour déplacer un ou plusieurs composants de l'outil agricole ; et
dans lequel le procédé comprend le déplacement actif d'un ou de plusieurs composants de l'outil agricole en activant l'au moins un actionneur en réponse à une activation du système de suspension.

12. Le procédé selon la Revendication 11, dans lequel le procédé comprend le transfert de fluide hydraulique entre le système de suspension et l'au moins un actionneur hydraulique en réponse à une activation du système de suspension.

13. Le procédé selon la Revendication 11 ou la Revendication 12, dans lequel la machine agricole comprend un dispositif de détection (360, 362) pour déterminer des données de capteur indicatives d'une activation du système de suspension, et dans lequel le procédé comprend :
la réception de données de capteur du dispositif de détection (360, 362) ; et
la détermination d'un signal de commande pour activer l'au moins un actionneur sur la base des données de capteur.

14. Le procédé selon l'une quelconque des revendications 11 à 13, dans lequel le système de suspension comprend une pluralité d'amortisseurs de chocs et la machine agricole comprend une pluralité d'actionneurs pour déplacer un ou plusieurs des outils d'engagement avec le sol, et dans lequel le procédé comprend :
la détermination des données d'activation et de suspension indiquant lequel des amortisseurs de chocs est activé pendant l'utilisation de la machine agricole en réponse à une activation du système de suspension ;
l'activation sélective d'un ou de plusieurs actionneurs parmi la pluralité d'actionneurs sur la base des données d'activation et de suspension.

15. Une unité de commande configurée pour contrôler l'au moins un actionneur (70, 218, 318) d'une machine agricole selon l'une quelconque des revendications 1 à 10 afin de mettre en oeuvre le procédé selon l'une quelconque des revendications 11 à 14.
